# EUROPÄISCHE PATENTSCHRIFT

(11) **EP 0 599 253 B1**
(45) Veröffentlichungstag und Bekanntmachung des Hinweises auf die Patenterteilung: **05.03.1997**
(21) Anmeldenummer: 93118780.1
(22) Anmeldetag: 22.11.1993
(51) Int. Cl.: B23K 26/08, D06H 7/22, A41H 43/00

(54) **Verfahren und Vorrichtung zum Trennen von Geweben schmelzfähigen Materials**
Procedure of and device for cutting webs of meltable material
Procédé et dispositif pour couper des tissus en matière fusible

(30) Priorität: 24.11.1992 DE 4239278; 05.10.1993 DE 4333877
(43) Veröffentlichungstag der Anmeldung: 01.06.1994
(73) Patentinhaber: Bieber, Reiner, D-44143 Dortmund (DE); Czekalla, Klaus-Dieter, Dipl.-Ing., D-44329 Dortmund (DE); Jachertz, Hans-Peter, Dipl.-Ing., D-59394 Nordkirchen (DE); Löbl, Olaf, Dipl.-Ing., D-09577 Niederwiesa (DE)
(72) Erfinder: Bieber, Reiner, D-44143 Dortmund (DE); Czekalla, Klaus-Dieter, Dipl.-Ing., D-44329 Dortmund (DE); Jachertz, Hans-Peter, Dipl.-Ing., D-59394 Nordkirchen (DE); Löbl, Olaf, Dipl.-Ing., D-09577 Niederwiesa (DE)

(56) Entgegenhaltungen:
- DE-A- 4 122 273
- DE-A- 4 133 040
- US-A- 3 931 491
- PATENT ABSTRACTS OF JAPAN vol. 11, no. 321 (M-633) 20. Oktober 1987 & JP-A-62 104 690 (MITSUBISHI ELECTRIC CORP) 15. Mai 1987

## Beschreibung

Die Erfindung betrifft ein Verfahren zum Trennen von Geweben aus schmelzfähigen Materialien.

Gleichermaßen wird eine Vorrichtung offenbart, welche zum Trennen von Formstücken aus solchen Geweben nach dem Verfahren besonders geeignet ist.

Das Trennen von Geweben aus schmelzfähigen Materialien, beispielsweise von bedingt luftdurchlässigen Kunststoffgeweben für die Herstellung von Rohlingen von Airbags als Personenschutzeinrichtungen in Kraftfahrzeugen, ist ein grundlegender Fertigungsschritt, dessen Qualität und Ausführung das später entstehende Produkt und auch das Zwischenprodukt und dessen weiteren Fertigungsablauf gravierend beeinflußt.

Das Trennen solcher Gewebe stößt aber auf eine Reihe von Problemen, die bisher nur unzureichend oder gar nicht gelöst wurden.

So erfordert beispielsweise die Herstellung von Gewebe-Ronden, d. h., von runden Gewebestücken für die oben bereits genannten Airbags, einen möglichst sauberen Schnitt ohne Ausfransungen der Schnittkanten oder Ausreißen einzelner Fasern.

Das üblicherweise genutzte Ausstanzen solcher Ronden mit jeweils Stempel und Matrize aufweisenden Stanzwerkzeugen und -pressen zeigt insbesondere beim gleichzeitigen Stanzen mehrerer Lagen zum einen die genannten Ausfransungen und unregelmäßigen Schnittkantenausbildungen , welche eine Weiterbearbeitung durch Nähen oder Kleben stark beeinträchtigen, zum anderen aber auch den Nachteil eines sehr hohen Verschleißes der Stanzwerkzeuge.

Selbst bei einem häufigen Werkzeugwechsel und damit relativ guten, durch entsprechend wenig verschlissene Werkzeuge ausgeführten Schnitten entsteht das Problem der unregelmäßigen Schnittkantenausbildung spätestens beim nachfolgenden Transport oder bei der nachfolgenden Bearbeitung.

Durch die einem in beliebiger Richtung geschnittenen Gewebe immanente Auflösung des formschlüssigen Faserverbundes erfolgt eine Ausfransung bei jeder weiteren auch noch so geringfügigen mechanischen Belastung. Gleiche Nachteile entstehen - ebenso wie bei allen anderen mechanischen Schneid- oder Trennvorgängen - beim Jet-Cutting, d. h., beim Trennen mittels Hochdruckwasserstrahl.

Das thermisch-mechanische Trennen mittels heißer Werkzeuge erlaubt zwar die ein weiteres Ausfransen verhindernde gewünschte Schmelzversiegelung und -verklebung der Schnittränder, ist aber für eine Fertigung in entsprechenden Stückzahlen nicht einsetzbar. Da hier eine annähernd wirtschaftliche Fertigungsweise nur durch das Schneiden oder Stanzen von Mehrfachlagen erreicht wird, entsteht der Nachteil, daß die einzelnen Lagen im Schnittbereich miteinander verschmelzen und in einem zusätzlichen Arbeitsgang erst wieder getrennt werden müssen.

Eine Vorrichtung zum Scheiden eines Bahn- oder Flachmaterials wird durch die DE 41 22 273 A1 offenbart, in deren Würdigung des Standes der Technik auch bereits auf die o. g. Verschleißprobleme hingewiesen wird.

Die hier jedoch dargestellte Lösung des Schneidens einer auf einer mit Ausnehmungen versehenen Trommel transportierten Bahn mit einem rotierenden Laserstrahl stößt auf Nachteile.

Auch hier kann nur jeweils eine Lage mit einem Schnitt getrennt werden, wenn keine Verklebung einzelner Lagen in Kauf genommen werden soll. Weiterhin wandert durch die kreisförmige Rotation des Laserstrahles und die Walzenrotation der Focuspunkt des Laserstrahles in Vertikalrichtung über die Schnittlänge nach oben und nach unten. Dies führt zu instabilen Schneidverhältnissen.

Die DE 41 33 040 A1 offenbart eine Vorrichtung zum Zuschneiden von Stoffen mittels Laserstrahlung, mit der Muster und Formen durch eine die Laserstrahlungs- und Schneidparameter speichernde und verarbeitende Steuerung ausgetrennt werden können. Das Verkleben der Schnittränder des Stoffes, insbesondere auf der plattenförmigen Unterlage, wird zwar durch die Steuerung verhindert, ein Schneiden mehrerer Lagen jedoch nicht ermöglicht, so daß diese Vorrichtung eher zum Schneiden von einzeln konfektionierten Formen oder Miniserien nutzbar ist.

Der nächstkommende Stand de Technik nach US-PS 3.931.491 zeigt ein Verfahren und eine Vorrichtung zum Schneiden mehrerer Lagen flacher Folien oder Textilien bei der die einzelnen Lagen durch einen Laserstrahl geschnitten und durch einen nahe der Strahlachse angeordneten Abstandshalter in einem Abstand geführt werden.
Der Abstandshalter, der hier entweder als ein den Laserstrahl umgebender Ring nachlaufend am Laserschneidkopf oder als flacher, über die gesammte Bearbeitungsbreite sich erstreckender und mit einer Schlitzöffnung für den Laserstrahl versehener Streifen ausgebildet ist, läßt jedoch nur ein Schneiden in einer Richtung ohne ausgeprägte Wendepunkte bzw. ein Schneiden in einem flächenmäßig nur sehr begrenztem und kleinem Bereich zu, da bei größeren Richtungsänderungen die einzelnen Lagen Wellen oder Beulen bilden und damit aus dem Schnitt- oder Focusbereich des Laserstrahles wandern.

Die JP 62-104690 in:"Pat.Abstr. of Japan",1987,VOL.11/No 321,Sec.M-633 zeigt ein Verfahren zum Laserschneiden von Schichtmaterial, bei dem der Abstand zwischen den einzelnen Lagen allein durch eine Flüssigkeit aufrechterhalten wird, während die Schichten an ihren Rändern eingespannt werden. Hierbei besteht der Nachteil, daß eine sichere Trennung nicht gewährleistet ist und zudem der bei der Verdampfung der Trennflüssigkeit während des Schneidens entstehende Dampfdruck ebenfalls die Lagen ausbeult und instabile Schnittverhältnisse verursacht.

Es bestand also die Aufgabe, ein Verfahren bereitzustellen, mit welchem schmelzfähige Gewebe sauber ohne große Ausfransungen und Auflösungen des Gewebeverbundes im Schnittbereich getrennt werden können, welches weiterhin ein Ausfransen bei nach dem Trennen erfolgenden weiteren mechanischen Belastungen verhindert und welches darüber hinaus wirtschaftlich in einer Weise einsetzbar ist, die das Trennen jeweils mehrerer Gewebeteile oder -lagen in einem Arbeitsgang und bei stabilen und sicheren Schneidparametern erlaubt.

Gelöst wird diese Aufgabe durch die Merkmale des Anspruchs 1. Weitere vorteilhafte Ausbildungen sind in den Unteransprüchen offenbart. Gleichermaßen wird eine Vorrichtung beansprucht, die in besonderer Weise zur Durchführung des Verfahrens beim Trennen von Formstücken aus Geweben schmelzfähigen Materials geeignet ist.

Bei dem erfindungsgemäßen Verfahren erfolgt das Trennen von Geweben schmelzfähigen Materials mittels Laserstrahlung, wobei mehrere Gewebelagen nah beieinander in einem solchen Abstand gehalten werden, daß die Laserstrahlung im Trennschnitt alle Gewebelagen durchdringt und einzeln schneidet. Der Laserstrahl bzw. die Laserstrahlung mit seiner sehr hohen Energiedichte konzentriert die zum Trennschnitt nötige Wärmeeinbringung auf einen sehr engen Schnitt-/Trennbereich von etwa 0,1 - 0,5 mm. In diesem Bereich wird das Gewebe nicht nur getrennt, sondern die getrennten Fasern jeweils einer Schnittkante auch untereinander verschmolzen, so daß der dem Gewebe innewohnende Formschluß des Faserverbundes erhalten bleibt und die nachfolgenden mechanischen Belastungen unkritisch sind.

Durch das Aufrechterhalten eines nur sehr geringen Abstandes zwischen den Gewebelagen, welcher bei der in Betrieb befindlichen Anlage etwa bei 1 mm liegt, wird durch die zwischen zwei Gewebelagen befindliche Gas-/Luftdämmung auch eine Wärmeübertragung auf die in Laserstrahlrichtung nächste Gewebelage vermieden. Ein Verkleben von zwei oder mehreren Gewebelagen wird daher mit Sicherheit verhindert.

Bei den genannten Abständen der Gewebelagen und bei einer Gewebelagendicke von 0,3 mm können bis zu fünf Lagen in einem nahe dem Fokuspunkt des Laserstrahls liegenden Bereich positioniert werden, dessen divergente oder konvergente Strahlungsanteile eine genügende Energiedichte für ein thermisches Trennen aufweisen. Damit können alle Gewebelagen einzeln und gleichzeitig geschnitten werden.

Der Abstand zwischen den Gewebelagen wird hierbei durch mechanisch wirkende, außerhalb des Trennbereiches sich befindliche Abstandshalter aufrechterhalten, wodurch ein Schneiden großflächiger Konturen und beliebiger Richtungen ohne Bewegung der Abstandshalter und damit ohne Beulung des zu schneidenden Materiales möglich wird.

In einer vorteilhaften Ausbildung erfolgt die Trennung mit einer Laserstrahlung einer Wellenlänge von unter 2 m, mit welcher eine Resonnanzschwingung der Macromoleküle des Gewebes erzeugt wird. Hierzu sind beispielsweise Excimer-Laser geeignet. Die kurze Wellenlänge führt aufgrund des sehr kleinen Focusdurchmessers zu einer sehr hohen Strahlintensität und zu einem sehr schnellen Durcheilen des Sublimationsgebietes des Gewebes, minimiert dadurch den Wärmeeintrag und führt so zu geringen Anforderungen an die Kühlung.

In einer weiteren Ausgestaltung des Verfahrens wird der Abstand zwischen den Gewebelagen durch innerhalb des Trennbereiches wirkende mechanische oder statische Fluidkräfte aufrechterhalten, welche durch ein seitlich der Gewebelagen in die durch jeweils benachbarte Oberflächen gebildeten Zwischenräume einströmendes Medium aufgebaut werden. Hierdurch wird auf einfache Weise eine hohe Gleichmäßigkeit des Abstandes der Gewebelagen erreicht, insbesondere auch dann, wenn Gewebe unterschiedlicher Wanddicke und Struktur getrennt werden.

In einer weiteren Ausbildung der Erfindung wird dieses Medium gleichzeitig zur Kühlung des Trennbereiches genutzt, was dazu führt, daß hohe Laserintensitäten genutzt und dicke Gewebe geschnitten werden können.

Eine besonder starke Kühlung unter Nutzung des Mediums wird dann erreicht, wenn das einströmende Medium Gas ist - evtl. zur Unterstützung des Schneidens ein Inertgas - und in den Zwischenräumen adiabatisch unter Kühlung der Umgebung entspannt wird. Hier ist der Vorrichtungsaufwand für das Verfahren gering, da lediglich Druck- und Querschnittsverhältnisse beim Ein- bzw. Ausströmen des Mediums in die Zwischenräume und aus der Düse entsprechend ausgebildet werden müssen.

Eine Kühlung läßt sich ohne apparativen Aufwand auch dann erreichen, wenn gemäß einer weiteren vorteilhaften Ausbildung der Erfindung die Trennbereiche durch Dissoziation eines Kühlmittels aus einer die Gewebelagen mindestens einseitig bedeckenden Schicht erfolgt, wobei das Kühlmittel mit Hilfe der aus der Laserstrahlung absorbierten Energie dissoziiert. Geeignet ist hier z.B.ein auf das Gewebe merkmalsgemäß aufgebrachtes wässriges Gel.

Bei der erfindungsgemäßen Vorrichtung nach Anspruch 7 zum Trennen von Formstücken aus Geweben schmelzfähigen Materials gemäß dem beanspruchten Verfahren sind Führungsmittel vorhanden, welche eine von einem Ballen oder einer Coiltrommel geförderte Gewebebahn zur Bildung von Gewebelagen aus einander benachbarten Abschnitten der Gewebebahn schlingenförmig mehrfach umlenken.

Durch das Fördern einer - quasi unendlichen - Gewebebahn von einer Coiltrommel läßt sich so eine sehr schnelle und vor allem kontinuierliche Fertigung aufbauen. Hierbei können je nach Ausbildung und Anzahl der Führungsmittel die benachbarten Gewebelagen gleichsinnige oder gegensätzliche Laufrichtung besitzen.

Bei gegensätzlicher Laufrichtung für den Trenn- bzw. den Schnittvorgang wird dann die Förderung bzw. die Längsbewegung der Gewebebahn gestoppt, während bei gleichsinniger Laufrichtung das Trennen mit entsprechend steuerbarem Laserschneidkopf mitlaufend geschehen kann.

Beim Trennen in Form eines Ausschneidens einer Gewebe-Ronde für z. B. Airbag-Rohlinge fallen die fertig aus der Gewebelage geschnittenen Rohlinge durch ihr Eigengewicht oder durch einen Stößel unterstützt aus dem beabstandeten Lagenpaket, und die nun entsprechend perforierte Gewebebahn wird wieder auf eine Coiltrommel aufgehaspelt und dem Recyclingprozeß zugeführt.

Hierbei wird der Abstand über die Abschnittslänge zwischen den Oberflächen der Gewebelagen durch Abstandshalter aufrechterhalten, welche zwischen den Führungsmitteln und an den jeweiligen Enden der benachbarten Abschnitte angeordnet sind und diese begrenzen. Die üblicherweise als Rollen ausgebildeten Führungsmittel können unabhängig von dem Abstand der Gewebelagen auf einfache Weise fest und ohne Verstellmechanik installiert werden. Dies ist besonders bei einer Vorrichtung wichtig, die mehr als z. B. vier Lagen übereinander schneiden kann. Die in der Regel leichter ausgebildeten Abstandshalter übernehmen dann in dem zwischen den Führungsmitteln liegenden geraden und parallelen Bereich der Schlingen einstellbar die genaue Abstandshaltung.

Bei bestimmten temperaturempfindlichen Materialien oder bei solchen mit einer besonderen Textur oder Faserstruktur, welche in der Gewebelagenebene unterschiedliche Spannungszustände - zumal bei Wärmeeintragung - erzeugen, liegt eine besonders vorteilhafte Ausbildung der Vorrichtung darin, daß zwischen den Führungsmitteln seitlich der Gewebelagen Flachstrahldüsen angeordnet sind, durch welche ein Medium in die durch jeweils benachbarte Oberflächen gebildeten Zwischenräume strömt. So wird verhindert, daß während des Trennschnittes durch Faltenbildung aufgrund der obengenannten Spannungszustände ein Berühren der Oberfläche, insbesondere im Schnittbereich, und eine daran anschließende Verklebung erfolgt.

Hierbei kann bei den bereits genannten Airbag-Rohlingen, welche aus einem bedingt luftdurchlässigen Material bestehen, quasistatisch durch Druckaufbau zwischen den Gewebelagen gearbeitet oder durch eine schnelle Strömung ein dynamischer Trageffekt zwischen den Lagen erreicht werden. In jedem Falle werden auch die beim Lasertrennen entstehenden Gase auf einfache Weise abgeführt.

Die Querschnitte der Flachstrahldüsen und der jeweiligen Zuleitungen lassen sich dabei zur gleichzeitigen Bereitstellung einer Kühlung so ausbilden, daß die adiabatische Entspannung und Abkühlung des Mediums durch schnelles Ausströmen erfolgt.

Eine besonders vorteilhafte Ausbildung der Vorrichtung besteht darin, daß zwischen den jeweils benachbarten Oberflächen der Gewebelagen mindestens eine Schicht aus zum Gewebe unterschiedlichem Material vorhanden ist. Dies kann durch manuelles oder maschinelles Einlegen von solchen Trennlagen oder -schichten geschehen oder auch in der Weise, daß ein entsprechend beschichtetes Gewebematerial verwendet wird. Es wird in jedem Falle auf einfachste Weise eine sehr gleichmäßige Beabstandung der Gewebelagen erreicht. Das zum Gewebe unterschiedliche Trennmaterial, z. B. Aluminiumfolie oder Trennpapier, beeinflußt dabei die Schnittrandverschmelzung des Gewebes nicht oder nur unwesentlich. Die Anzahl der zu schneidenden Gewebelagen läßt sich hierdurch wesentlich steigern.

Bei einer Vorrichtung gemäß Anspruch 10, wobei die Gewebe mindestens einseitig mit einer Schicht von zum Gewebe unterschiedlichem Material belegt sind, ist es vorteilhaft, daß die benachbarten Abschnitte durch an deren Ende und zwischen den
Führungsmitteln angeordnete Abstandshalter begrenzt werden, welche jeweils benachbarte Oberflächen der Gewebelagen über der Abschnittslänge aufeinander gleitend halten.
Hierdurch läßt sich die Anzahl der Abstandshalter, insbesondere bei mehr als zweifacher Gewebelagenschichtung, deutlich verringern und der gesamte Anlagenaufwand in Grenzen halten. Es ist allerdings zur Sicherung der Funktion bei mehr als zwei Gewebelagen eine beidseitig beschichtete Gewebebahn erforderlich.

Die Abstandshalter bestehen vorteilhafterweise aus Rollen, Kämmen oder Gleiteinrichtungen, die die Gewebelagenbreite überdecken. Hierbei sind Rollen und Kämme besonders dafür geeignet, unbeschichtete Gewebebahnen auf Abstand zu halten, während die Gleiteinrichtungen wie z. B. Gleitsteine oder Gleitführungen einfache und billige Mittel für eine Vorrichtung darstellen, die Gewebebahnen mit beschichteter Oberfläche bearbeitet.

Die bereits genannten und vor dem Laserschnitt evtl. bestehenden Falten durch unterschiedliche Flächenspannungen lassen sich in vorteilhafter Weise dadurch weiter reduzieren, daß die Führungsmittel eine Zugspannung in Förder- bzw. Längsrichtung auf die Abschnitte aufbringen.

Dies geschieht entweder durch elastische Elemente wie z. B. Federn, welche in geeigneter Weise auf die Lagerung der Führungsmittel wirken, oder durch eine in Förderrichtung abgestuft steigende Geschwindigkeit von als angetriebene oder gebremste Rollen ausgebildeten Führungsmitteln.

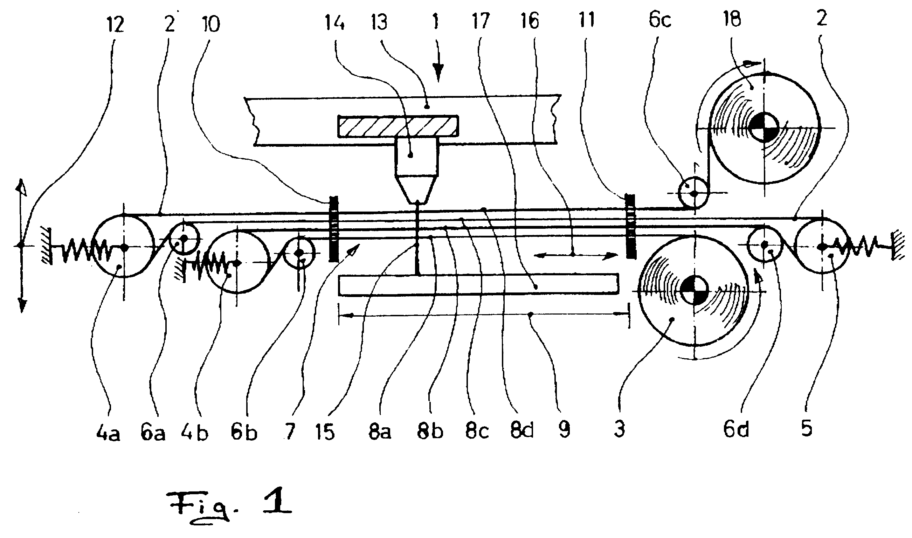

Anhand eines Ausführungsbeispiels, dargestellt in der Fig. 1, lassen sich das erfinderische Verfahren und auch die erfinderische Vorrichtung noch einmal verdeutlichen.

In der 4-Fach-Trennvorrichtung 1 wird die unbeschichtete Gewebebahn 2 von einer Coiltrommel 3 abgezogen und durch die Führungsmittel 4 a, 4 b, 5 und 6 a - d mehrfach umgelenkt und schlingenförmig in parallele Gewebelagen 7 geführt.

Diese Gewebelagen bilden einander benachbarte Abschnitte 8 a - 8 d der Gewebebahn 2 und weisen die gleiche Abschnittslänge 9 auf, die durch die in Form von Kämmen 10 und 11 ausgebildeten Abstandshalter begrenzt wird. Die Kämme sind in ihren Zahnabständen feineinstellbar, während eine grobe Voreinstellung durch die bei dieser Vorrichtung ebenfalls in der Vertikalrichtung 12 verstellbaren Führungsmittel 4 a, 4 b, 5, 6 a, 6 c und 6 d erfolgen kann.

Über einen in einem Portal 13 geführten und in allen drei räumlichen Achsen steuerbaren Laserschneidkopf 14 wird eine fokussierte Laserstrahlung 15 auf die Gewebelagen 7 gerichtet, welche diese einzeln und gleichzeitig schneidet. Die Gewebebahn 2 steht hierbei still. Die Lagerungen der Führungsmittel 4 a, 4 b und 5 sind dabei zugfederbelastet, wodurch eine Zugspannung in Förder- oder Längsrichtung 16 aufgebracht wird und eine eventuell entstehende Faltenspannung überdeckt.

Unterhalb des Arbeitsbereiches befindet sich der Auffangbehälter 17, der die ausgeschnittenen Ronden auffängt. Nach dem erfolgten Trennen von einem oder mehreren Formstücken innerhalb der Abschnitte 8 a - d werden der Antrieb der Coiltrommel 18, welche die perforierte Gewebe-Restbahn aufhaspelt, wieder zugeschaltet und neue Gewebebahnlängen in die Abschnittsbereiche gefördert.

### Bezugszeichenliste

- 1: 4-Fach-Trennvorrichtung
- 2: Gewebebahn
- 3: Coiltrommel
- 4 a, 4 b: Führungsmittel
- 5: Führungsmittel
- 6 a - 6 d: Führungsmittel
- 7: Gewebelagen
- 8 a - 8 d: Gewebebahnabschnitte
- 9: Länge der Gewebebahnabschnitte
- 10, 11: Abstandshalter (Kämme)
- 12: Vertikalrichtung
- 13: Portal
- 14: Laserschneidkopf
- 15: Laserstrahlung
- 16: Förder- und Längsrichtung
- 17: Auffangbehälter
- 18: Coiltrommel

## Patentansprüche

1. Verfahren zum Trennen von Geweben (2) schmelzfähigen Materials, wobei das Trennen mittels Laserstrahlung (15) erfolgt, und bei welchem mehrere Gewebelagen (7) mittels mechanisch wirkender Abstandshalter (10, 11) nah beieinander in einem solchen Abstand gehalten werden, daß die Laserstrahlung (15) im Trennschnitt alle Gewebelagen (7) durchdringt und einzeln schneidet, dadurch gekennzeichnet, daß der Abstand zwischen den Gewebelagen (7) durch die mechanisch wirkenden Abstandshalter (10, 11) außerhalb des Trennbereiches der Laserstrahlung (15) aufrechterhalten wird.

2. Verfahren nach Anspruch 1, dadurch gekennzeichnet, daß das Trennen durch eine mit einer Laserstrahlung (15) einer Wellenlänge von unter 2 m erzeugten Resonnanzschwingung der Macromoleküle des Gewebes erfolgt.

3. Verfahren nach Anspruch 1 oder 2, dadurch gekennzeichnet, daß der Abstand zwischen den Gewebelagen durch innerhalb eines Trennbereiches wirkende dynamische oder statische Fluidkräfte aufrechterhalten wird, welche durch ein seitlich der Gewebelagen in die durch jeweils benachbarte Oberflächen gebildeten Zwischenräume einstömendes Medium aufgebaut werden.

4. Verfahren nach Anspruch 1 bis 3, dadurch gekennzeichnet, daß die Trennbereiche durch ein in die durch jeweils benachbarte Oberflächen gebildeten Zwischenräume einstömendes Medium gekühlt werden.

5. Verfahren nach Anspruch 1 bis 4, dadurch gekennzeichnet, daß das einströmende Medium Gas ist und in den Zwischenräumen adiabatisch unter Kühlung der Umgebung entspannt wird.

6. Verfahren nach Anspruch 1 bis 3, dadurch gekennzeichnet, daß die Trennbereiche durch Dissoziation eines Kühlmittels aus einer die Gewebelagen mindestens einseitig bedeckenden Schicht erfolgt, wobei das Kühlmittel mit Hilfe der aus der Laserstrahlung absorbierten Energie dissoziiert.

7. Vorrichtung zur Durchführung des Verfahrens nach einem der Ansprüche 1 bis 6, bei der das Trennen mittels einer auf mehrere, nah beieinander mittels mechanisch wirkender Abstandshalter (10, 11) in einem Abstand gehaltenen Gewebelagen (7) gerichteten Laserstrahlung (15) erfolgt, welche im Trennschnitt alle Gewebelagen (7) durchdringt und einzeln schneidet, dadurch gekennzeichnet, daß Führungsmittel (4 a, 4 b, 5, 6 a - 6 d) vorhanden sind, welche eine von einem Ballen oder von einer Coiltrommel (3, 18) geförderte Gewebebahn (2) zur Bildung von Gewebelagen (7) aus einander benachbarten Abschnitten (8 a - 8 d) der Gewebebahn (2) schlingenförmig mehrfach umlenken, wobei die benachachbarten Abschnitte (8 a - 8 d) durch an deren Enden und zwischen den Führungsmitteln (4 a, 4 b, 5, 6 a - 6 d) angeordneten Abstandshalter (10, 11), die sich außerhalb des Trennbereichs der Laserstrahlung (15) befinden, begrenzt werden, welche Abstandshalter (10, 11) über die Abschnittslänge (9) der Abschnitte (8a - 8d) einen Abstand zwischen jeweils benachbarten Oberflächen der Gewebelagen (7) aufrechterhalten.

8. Vorrichtung nach Anspruch 7, dadurch gekennzeichnet, daß zwischen den Führungsmitteln seitlich der Gewebelagen (7) Flachstrahldüsen angeordnet sind, durch welche ein Medium in die durch jeweils benachbarte Oberflächen gebildeten Zwischenräume strömt.

9. Vorrichtung nach Anspruch 7, dadurch gekennzeichnet, daß zwischen den jeweils benachbarten Oberflächen der Gewebelagen (7) mindestens eine Schicht von zum Gewebe unterschiedlichen Material vorhanden ist.

10. Vorrichtung nach Anspruch 9, wobei die Gewebe mindestens einseitig mit einer Schicht von zum Gewebe unterschiedlichem Material belegt sind, dadurch gekennzeichnet, daß die benachbarten Abschnitte (8 a - 8 d) durch an deren Ende und zwischen den Führungsmitteln (4 a, 4 b, 5, 6 a - 6 d) angeordneten Abstandshalter (10, 11) begrenzt werden, welche jeweils benachbarte Oberflächen der Gewebelagen (7) im Bereich der Abschnittslänge aufeinander gleitend halten.

11. Vorrichtung nach einem der Ansprüche 7 bis 10, dadurch gekennzeichnet, daß die Abstandshalter (10, 11) aus die Gewebelagenbreite überdeckenden Kämmen (10, 11) Rollen oder Gleiteinrichtungen bestehen.

12. Vorrichtung nach einem der Ansprüche 7 bis 11, dadurch gekennzeichnet, daß die Führungsmittel (4 a, 4 b, 5) eine Zugspannung in Förder- bzw. Längsrichtung auf die Abschnitte (8 a - 8 d) aufbringen.

## Claims

1. Procedure for cutting webs (2) of meltable material according to which the cutting process takes place by means of a laser beam (15) with several web layers (7) being held in place by mechanically acting distance spacers (10, 11) situated close to one another and at such a distance apart that the laser beam (15) penetrates all web layers (7) thus performing a parting cut which severs the layers individually.
characterised in that the spacing distance between the web layers (7) is maintained by means of the mechanically acting distance spacers (10, 11) outside the cutting area of the laser beam (15).

2. Procedure in accordance with claim 1 characterised in that the cutting process is effected by means of a laser beam (15) of a wavelength of under 2 m by means of a resonance vibration of the web macromolecules, generated

3. Procedure in accordance with claim 1 or 2 characterised in that the spacing distance between the web layers is maintained by dynamic or static flow forces within a cutting area, such forces being generated by a medium flowing into the interspaces formed by each of the adjacent surfaces at the side of the web layers.

4. Procedure in accordance with claim 1 to 3 characterised in that the cutting areas are cooled by a medium flowing into the interspaces formed by each of the adjacent surfaces.

5. Procedure in accordance with claim 1 to 4 characterised in that the influx medium assumes the form of gas undergoing adiabatic expansion in the interspaces in conjunction with atmospheric cooling.

6. Procedure in accordance with claim 1 to 3 characterised in that cutting results from disassociation of a coolant from one of the layers covering the web layers on one side at least, whereby disassociation of the said coolant occurs by means of the energy absorbed from the laser beam.

7. Device for performing the said procedure in accordance with claims 1 to 6 on which the cutting process is effected by means of a laser beam (15) focused on several web layers (7) spaced apart by mechanically acting distance spacers (10, 11) situated close to one another, the said laser beam penetrating all web layers (7), thus performing a parting cut which severs them individually, characterised in that guide elements (4a, 4b, 5, 6a - 6d) are present which subject a web layer (2) fed from a bale or coil drum (3, 18) to multiple loop-shaped deflection so as to form web layers (7) from adjacent sections (8a - 8d) of the web sheeting (2), whereby the said adjacent sections (8a - 8d) are limited by distance spacers (10, 11) mounted at their ends and between the guide elements (4a, 4b, 5, 6a - 6d), such distance spacers (10, 11) being located outside the cutting area of the laser beam (15) and maintaining a spacing distance between each of the adjacent surfaces of the web layers (7) across the length (9) of the sections (8a - 8d).

8. Device in accordance with claim 7 characterised in that flat-type jet nozzles are installed between the guide elements at the side of the web layers (7) through which a medium flows into the interspaces formed by each of the adjacent surfaces.

9. Device in accordance with claim 7 characterised in that, between each of the adjacent surfaces of the web layers (7), at least one layer of material differing from the web fabric is present.

10. Device in accordance with claim 9 whereby the web is coated on one side at least with a layer of material differing from the web fabric, characterised in that the adjacent sections (8a - 8d) are limited by distance spacers (10, 11) mounted at their ends and between the guide elements (4a, 4b, 5, 6a - 6d), such distance spacers holding each of the adjacent surfaces of the web layers (7) on top of one another to form a sliding surface in the area of the section length.

11. Device in accordance with claims 7 to 10 characterised in that the distance spacers (10, 11) comprise web-layer width covering combs (10, 11) rollers or slide units.

12. Device in accordance with claims 7 to 11 characterised in that the guide elements (4a, 4b, 5,) apply tensile stress to the sections (8a - 8d) in the feed or longitudinal direction.

## Revendications

1. Procédé pour couper des tissus (2) en matière fusible, la coupe ayant lieu au moyen d'un rayon laser (15), et pour lequel plusieurs couches de tissu (7) sont maintenues au moyen d'écarteurs (10, 11) à effet mécanique, les unes près des autres, à une telle distance que le rayon laser (15), dans la coupe, pénètre et coupe individuellement toutes les couches de tissu (7),
caractérisé en ce que la distance entre les couches de tissu (7) est maintenue par les écarteurs (10, 11) à effet mécanique en dehors de la zone de coupe du rayon laser (15).

2. Procédé selon la revendication 1, caractérisé en ce que la coupe a lieu par une oscillation de résonance, produite avec un rayon laser (15) d'un longueur d'onde inférieure à 2 m, des macromolécules du tissu.

3. Procédé selon la revendication 1 ou 2, caractérisé en ce que la distance entre les couches de tissu est maintenue par des forces fluides à effet dynamique ou statique à l'intérieur de la zone de coupe, lesquelles sont constituées par un fluide s'écoulant, latéralement par rapport aux couches de tissu, dans les espaces intermédiaires formés respectivement par des surfaces voisines.

4. Procédé selon la revendication 1 à 3 caractérisé en ce que les zones de coupe sont refroidies par un fluide s'écoulant dans les espaces intermédiaires formés respectivement par des surfaces voisines.

5. Procédé selon la revendication 1 à 4 caractérisé en ce que le fluide s'écoulant est du gaz et qu'il est détendu dans les espaces intermédiaires, d'une manière adiabatique, en refroidissant l'environnement.

6. Procédé selon la revendication 1 à 3 caractérisé en ce que la séparation des zones de coupe a lieu par dissociation d'un refroidisseur émanant de la couche couvrant au moins d'un côté les couches de tissu, le refroidisseur dissociant à l'aide de l'énergie absorbée du rayon laser.

7. Dispositif destiné à la réalisation du procédé selon une des revendications 1 à 6 pour lequel la coupe a lieu au moyen d'un rayon laser (15) dirigé sur plusieurs couches de tissu (7) proches les unes des autres, maintenues à distance par des écarteurs (10, 11) à effet mécanique, le rayon laser pénétrant et coupant individuellement, dans la coupe, toutes les couches de tissu (7), caractérisé en ce qu'il existe des moyens de guidage (4a, 4b, 5, 6a-6d) qui renvoient plusieurs fois, en boucle, une bande de tissu (2) transportée par une balle ou un tambour de bobine (3, 18) et destinée à former des couches de tissu (7) à partir de sections voisines les unes des autres (8a-8d) de la bande de tissu (2), les sections voisines (8a-8d) étant limitées par des écarteurs (10-11) disposés à leurs extrémités et entre les moyens de guidage (4a, 4b, 5, 6a-6d) qui se trouvent en dehors de la zone de coupe du rayon laser (15), écarteurs (10, 11) qui maintiennent une distance entre les surfaces respectivement voisines des couches de tissu (7) sur la longueur (9) des sections (8a-8d).

8. Dispositif selon la revendication 7 caractérisé en ce que des buses à jet plat sont disposés entre les moyens de guidage latéralement par rapport aux couches de tissu (7), buses à travers lesquels coulent un fluide dans les espaces intermédiaires formés par les surfaces respectivement voisines.

9. Dispositif selon la revendication 7, caractérisé en ce que, entre les surfaces respectivement voisines des couches de tissu (7), il existe au moins une couche de matériau différent du tissu.

10. Dispositif selon la revendication 9, les tissus étant recouverts, au moins d'un côté, d'une couche de matériau différent du tissu, caractérisé en ce que les sections voisines (8a-8d) sont limitées par des écarteurs (10, 11) disposés à leurs extrémités et entre les moyens de guidage (4a, 4b, 5, 6a-6d), écarteurs maintenant coulissantes les unes sur les autres les surfaces respectivement voisines des couches de tissu (7) dans la zone de la longueur de section.

11. Dispositif selon une des revendications 7 à 10, caractérisé en ce que les écarteurs (10, 11) se composent des peignes (10, 11), rouleaux ou dispositifs de coulissement couvrant la largeur des couches de tissu.

12. Dispositif selon une des revendications 7 à 11, caractérisé en ce que les moyens de guidage (4a, 4b, 5) appliquent une tension de traction dans le sens du transport ou longitudinal sur les sections (8a-8d).
